# EUROPEAN PATENT APPLICATION

(11) **EP 4 318 115 A1**
(43) Date of publication of application: **07.02.2024**
(21) Application number: 22780711.2
(22) Date of filing: 28.03.2022
(51) Int. Cl.: G02F 1/1339, C08G 75/045

(54) **CURABLE RESIN COMPOSITION FOR USE IN SEALING MATERIAL FOR FILM LIQUID CRYSTAL PANEL, AND FILM LIQUID CRYSTAL PANEL HAVING END SEALED BY SAID CURABLE RESIN COMPOSITION**

(30) Priority: 29.03.2021 JP 2021055701
(71) Applicant: NOF Corporation, Shibuya-ku Tokyo 150-6019 (JP)
(72) Inventor: KOMATSUZAKI, Satoru, Chita-gun, Aichi 470-2373 (JP)
(74) Representative: Hoffmann Eitle
(86) International application number: PCT/JP2022/014896
(87) International publication number: WO 2022/210500

(57) **Abstract**

The present invention addresses the problem of providing a curable resin composition for use in a sealing material for a film liquid crystal panel, the resin composition being stable in a state of being uncured, not experiencing crystal misalignment even under a harsh environment of heat and humidity or under conditions of acidity, and having excellent conformance to a substrate. In order to solve the problem described above, there is provided a curable resin composition for use in a sealing material for film liquid crystal panel, the composition containing: (A) a polyfunctional thiol compound; (B) a polyfunctional (meth)acrylic compound which has 3-6 (meth)acrylic groups and has a (meth)acrylic equivalent of 100-250; (C) a polyfunctional acrylic compound which has 2-4 (meth)acrylic groups; and (D) a photopolymerization initiator. The blending mass ratio of (B)/(C) is 0.1-1.0, and the ratio between thiol groups of (A) and polymerizable unsaturated bonds of (B) and (C) (thiol groups/polymerizable unsaturated bonds) is 0.5-3.0.

## Description

### TECHNICAL FIELD

The present invention relates to a curable resin composition for use in a sealing material for a film liquid crystal panel. Specifically, the present invention relates to a curable resin composition for forming a sealing material for a film liquid crystal which is stable in an uncured state and whose cured product does not cause misalignment of a liquid crystal even in a state where the cured product is in contact with the liquid crystal under harsh environment of heat and humidity or acidic conditions and, in addition, is excellent in conformance to a substrate regardless of the change in temperature environment. The present invention also relates to a film liquid crystal panel in which a sealing material including the curable resin composition is used.

### BACKGROUND ART

Liquid crystal panels are widely used for image display of various electronic devices such as mobile phones and personal computers. A liquid crystal panel usually includes a pair of glass base plates each having an electrode on the surface, a frame-shaped sealing material sandwiched between the glass base plates, and a liquid crystal layer surrounded by the sealing material.

Conventionally, a photocurable acrylic resin composition has been used as the sealing material. However, though conventional acrylic resin compositions are immediately cured by light, in addition, are stable in an uncured state, do not gel during storage at normal temperature or during operation, and are excellent in workability and productivity, they have a problem that a large amount of outgassing is caused in the production process, and adhesiveness between the sealing material and the substrate is reduced. Though a sealing material is required to protect a liquid crystal in harsh environment of heat and humidity, conventional sealing materials including an acrylic resin composition have a problem that the liquid crystal is contaminated by moisture, an acid, and a decomposition product of the sealing material under wet heat environment or acidic conditions due to the low barrier property and easy decomposition of the sealing material, and the orientation of the liquid crystal is disordered.

For these problems, it is known that by using a resin composition containing a thiol monomer having a thiol group and an ene monomer having a carbon-carbon double bond, occurrence of outgassing can be suppressed to improve adhesiveness of a sealing material (Patent Document 1). In Patent Document 1, it has been also confirmed that misalignment of a liquid crystal does not occur even in a state where the sealing material and the liquid crystal are in contact with each other under harsh environment of heat and humidity due to the improvement in the moisture barrier property and durability of the sealing material.

However, the sealing material of Patent Document 1 has a problem that misalignment of the liquid crystal occurs under acidic conditions.

In recent years, a film liquid crystal panel in which a flexible film material is used as a substrate has attracted attention, and has been developed. Unlike sealing materials used for a rigid glass base plate, sealing materials used for this film liquid crystal panel are required to be rich in flexibility and toughness and follow the film substrate. Further, in view of practical use, this conformance is required even after an accelerated test simulating the change in a temperature environment to which the film liquid crystal panel can be exposed.

However, the sealing material of Patent Document 1 lacks flexibility in exchange for the moisture barrier property, and has a problem that conformance to a flexible film substrate is insufficient, and a trouble of the sealing material being peeled off from the film occurs.

Further, in general, because a thiol monomer and an ene monomer have high reactivity, the sealing material of Patent Document 1 has poor stability in an uncured state, and there is also a problem of poor workability and productivity.

### PRIOR ART DOCUMENT

### PATENT DOCUMENT

Patent Document 1: JP-A-2016-169298

### SUMMARY OF THE INVENTION

### PROBLEMS TO BE SOLVED BY THE INVENTION

The present invention has been achieved in view of the above circumstances, and the problem is to provide a curable resin composition for use in a sealing material for a film liquid crystal panel which is stable in an uncured state and whose cured product does not cause misalignment of the liquid crystal even in a state where the cured product is in contact with the liquid crystal under harsh environment of heat and humidity or acidic conditions and, in addition, is excellent in conformance to a substrate regardless of the change in temperature environment, and to provide a film liquid crystal panel including the curable resin composition as a sealing material.

### MEANS FOR SOLVING THE PROBLEMS

To solve the above problems, the present inventors have conducted intensive studies, and found that by combining a specific polyfunctional (meth)acrylic compound and a specific polyfunctional (meth)allyl compound, and further using a curable resin composition containing a polyfunctional thiol compound, a sealing material for a film liquid crystal panel in which the curable resin composition is stable in an uncured state, and the cured product does not cause misalignment of the liquid crystal even in a state where the cured product is in contact with the liquid crystal in harsh environment of heat and humidity or acidic conditions is obtained. Further, the present inventors have found that this sealing material has both flexibility and toughness, and is excellent in conformance to a substrate regardless of the change in temperature environment, and have completed the present invention.

That is, the present invention is the following [1] to [2].
[1] A curable resin composition for use in a sealing material for a film liquid crystal panel, including:
   (A) a polyfunctional thiol compound having 2 to 6 thiol groups;
   (B) a polyfunctional (meth)acrylic compound having 3 to 6 (meth)acrylic groups and a (meth)acrylic equivalent of 100 to 250;
   (C) a polyfunctional allyl compound having 2 to 4 (meth)allyl groups; and
   (D) a photopolymerization initiator; wherein
      a blending mass ratio (B)/(C) between (B) and (C) is 0.1 to 1.0, and
      a ratio between a functional group concentration of thiol groups of (A) and a sum of a functional group concentration of a polymerizable unsaturated bond of (B) and a functional group concentration of a polymerizable unsaturated bond of (C) (thiol group/polymerizable unsaturated bond) is 0.5 to 3.0.
[2] A film liquid crystal panel having an end sealed by the curable resin composition according to [1] above.

In the present invention, the "(meth)allyl compound" means a generic term including both a compound having an allyl group and a compound having a methallyl group, and the same applies to the "(meth)acrylic group" and the like. In the present invention, "oo to ××" indicating a numerical range is a concept including a lower limit value ("oo") and an upper limit value ("××") thereof unless otherwise specified. That is, it means exactly "oo or more and ×× or less".

### EFFECT OF THE INVENTION

According to the present invention, a curable resin composition for use in a sealing material for a film liquid crystal panel which is stable in an uncured state and whose cured product does not cause misalignment of the liquid crystal even in a state where the cured product is in contact with the liquid crystal under harsh environment of heat and humidity or acidic conditions and, in addition, is excellent in conformance to a substrate regardless of the change in temperature environment can be provided. A film liquid crystal panel including the curable resin composition as a sealing material can be also provided.

### MODE FOR CARRYING OUT THE INVENTION

Hereinafter, the present invention will be described in detail. The curable resin composition of the present invention is used for a sealing material for a film liquid crystal panel, and includes the following (A), (B), (C), and (D) as essential components.

### <Polyfunctional thiol compound (A)>

The polyfunctional thiol compound (A) is a compound having 2 to 6 thiol groups. The polyfunctional thiol compound (A) can be used alone or in combination of two or more types thereof. By such a compound being contained, the thiol-ene reaction proceeds with other components, and curability can be increased. The formed thioether bond can flexibly change the bond angle as compared with a bond of an atom such as C, O, or N, thus the cured product has high flexibility, and the conformance of the sealing material to the substrate can be increased. A cured product formed of the thioether bond has a high bond angle flexibility, and can be cured at a high density so that atoms fill gaps between bonds. Therefore, the cured product has a high barrier property against moisture and acids, and can prevent misalignment of a liquid crystal even under a harsh humid heat test or acidic conditions.

The polyfunctional thiol compound (A) is preferably a compound represented by the following Formula 1. 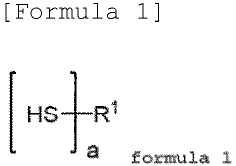 (In the formula, a is an integer of 2 to 6, and R¹ is a 2 to 6 valent organic group having 10 to 60 carbon atoms.)

In the formula, a is preferably an integer of 3 to 6 from the viewpoint of increasing the barrier property against moisture and acids of a sealing material for a film liquid crystal panel and suppressing misalignment of a liquid crystal even under a harsh humid heat test or acidic conditions. When a in the formula is within this range, shrinkage on curing does not increase and the conformance to the substrate after curing does not decrease, and a good cured product is obtained. From the same viewpoint, R¹ is preferably 3 to 6 valent. The carbon number of R¹ is 10 to 60, preferably 10 to 45, and more preferably 12 to 30. When the carbon number of R¹ is within this range, the crosslinking density of the cured product of the curable resin composition is sufficient, the sealing material is excellent in the barrier property against moisture and acids, and misalignment of the liquid crystal can be suppressed even under a harsh humid heat test or acidic conditions.

The organic group is a group that contains C and can further contain at least one element selected from the group consisting of Si, N, P, O, and S. The organic group can be a polymer having a repeating unit. In the structure, a group such as a ketone group, an ester group, an ether group, a hydroxyl group, an amide group, a thioether group, an isocyanurate group, or a glycoluril can be also contained.

Specific examples of the polyfunctional thiol compound (A) include dipentaerythritol hexakis(3-mercaptopropionate), trimethylolpropane tris(2-mercaptoacetate), trimethylolpropane tris(3-mercaptopropionate), trimethylolethane tris(2-mercaptoacetate), trimethylolethane tris(3-mercaptopropionate), pentaerythritol tetrakis(2-mercaptoacetate), pentaerythritol tetrakis(3-mercaptopropionate), 1,2,3-tris(2-mercaptoethylthio)propane, 1,2,3-tris(3-mercaptopropylthio)propane, 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, tetrakis(2-mercaptoethylthiomethyl)methane, tetrakis(3-mercaptopropylthiomethyl)methane, 1,3,5-tris(mercaptoethyleneoxy)benzene, and tris-[(3-mercaptopropiomorphoxy)-ethyl]-isocyanurate.

Among the compounds represented by the Formula 1 above, polyfunctional thiols having a pentaerythritol skeleton, polyfunctional thiols having a dipentaerythritol skeleton, and polyfunctional thiols having an isocyanurate skeleton are preferable.

Among them, dipentaerythritol hexakis(3-mercaptopropionate), pentaerythritol tetrakis(3-mercaptopropionate), and tris-[(3-mercaptopropionyloxy)-ethyl]-isocyanurate are preferable because the barrier property against moisture and acids of the sealing material can be increased, misalignment of a liquid crystal can be suppressed even under a harsh humid heat test or acidic conditions, the flexibility of the cured product of the curable resin composition can be increased, and the conformance of the sealing material to the substrate can be increased.

As the polyfunctional thiol compound (A), a commercially available product can be used, or a synthesized product can be used. As the synthesis method, for example, the polyfunctional thiol compound (A) can be obtained by esterifying a polyhydric alcohol such as pentaerythritol with a mercapto group-containing carboxylic acid such as 3-mercaptopropionic acid by a known method.

### <Polyfunctional (meth)acrylic compound (B)>

The polyfunctional (meth)acrylic compound (B) is a compound having 3 to 6 (meth)acrylic groups and a (meth)acrylic equivalent of 100 to 250. The (meth)acrylic equivalent is a number obtained by dividing the molecular weight by the number of (meth)acrylic groups contained. The polyfunctional (meth)acrylic compound (B) can be used alone or in combination of two or more types thereof. By the polyfunctional (meth)acrylic compound (B) being contained, moderate flexibility and polarity can be imparted to the cured product of the curable resin composition, and the conformance of the sealing material to the substrate can be increased regardless of the change in temperature environment. Though the reactivity between the polyfunctional thiol compound (A) and the polyfunctional (meth)allyl compound (C) is high and the uncured product of the curable resin composition containing them has poor stability and is difficult to use, the reactivity can be suppressed by coexistence of the polyfunctional (meth)acrylic compound (B), and thus the stability of the uncured product of the curable resin composition is increased, and the usability can be improved.

The (meth)acrylic equivalent of the polyfunctional (meth)acrylic compound (B) is preferably 120 to 200 from the viewpoint that the conformance of the sealing material to the substrate can be increased regardless of the change in temperature environment while maintaining the flexibility and the barrier property against moisture and acids of the cured product of the curable resin composition.

The polyfunctional (meth)acrylic compound (B) is preferably a compound represented by the following Formula 2 . 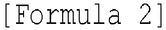 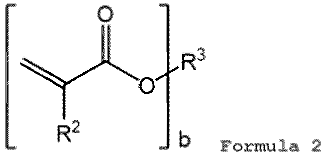
(In the formula, b is an integer of 3 to 6. R² is a hydrogen atom or a methyl group. R³ is a 3 to 6 valent organic group having 5 to 70 carbon atoms.)
R² in the formula is a hydrogen atom or a methyl group, and is preferably a hydrogen atom from the viewpoint of increasing the flexibility of the cured product of the curable resin composition and increasing the conformance of the sealing material to the substrate. b Is an integer of 3 to 6, and when b is in this range, the conformance of the sealing material to the substrate can be increased regardless of the change in temperature environment, and further the stability of the uncured product of the curable resin composition can be increased and the usability can be improved while maintaining the flexibility and the barrier property against moisture and acids of the cured product of the curable resin composition. From the same viewpoint, R³ is also 3 to 6 valent. The carbon number of R³ is 5 to 70, preferably 5 to 60, and more preferably 5 to 50. When the carbon number of R³ is within this range, the conformance of the sealing material to the substrate can be increased regardless of the change in temperature environment while maintaining the flexibility and the barrier property against moisture and acids of the cured product of the curable resin composition.

The organic group is a group that contains C and can further contain at least one element selected from the group consisting of Si, N, P, O, and S. The organic group can be a polymer having a repeating unit. In the structure, a group such as a ketone group, an ester group, an ether group, a hydroxyl group, an amide group, a thioether group, or an isocyanurate group can be also contained.

Specific examples of the polyfunctional (meth)acrylic compound in which b is 3 include trimethylolpropane trimethacrylate, ethylene oxide-modified trimethylolpropane tri(meth)methacrylate, propylene oxide-modified trimethylolpropane tri(meth)methacrylate, caprolactone-modified trimethylolpropane tri(meth)acrylate, ethylene oxide-modified glycerol tri(meth)acrylate, propylene oxide-modified glycerol tri(meth)acrylate, pentaerythritol trimethacrylate, ethoxylated isocyanurate tri(meth)acrylate, ethylene oxide-modified isocyanurate tri(meth)acrylate, propylene oxide-modified isocyanurate tri(meth)acrylate, and caprolactone-modified isocyanurate tri(meth)acrylate.

Specific examples of the polyfunctional (meth)acrylic compound in which b is 4 include ditrimethylolpropane tetra(meth)acrylate, ethylene oxide-modified ditrimethylolpropane tetra(meth)acrylate, propylene oxide-modified ditrimethylolpropane tetra(meth)acrylate, caprolactone-modified ditrimethylolpropane tetra(meth)acrylate, pentaerythritol tetramethacrylate, ethylene oxide-modified pentaerythritol tetra(meth)acrylate, propylene oxide-modified pentaerythritol tetra(meth)acrylate, and caprolactone-modified pentaerythritol tetra(meth)acrylate.

Specific examples of the polyfunctional (meth)acrylic compound in which b is 5 to 6 include dipentaerythritol hydroxypenta(meth)acrylate, ethylene oxide-modified dipentaerythritol hexa(meth)acrylate, propylene oxide-modified dipentaerythritol hexa(meth)acrylate, caprolactone-modified dipentaerythritol hexa(meth)acrylate, and alkyl-modified dipentaerythritol hexa(meth)acrylate.

Among the polyfunctional (meth)acrylic compounds, a (meth)acrylic compound having an isocyanurate skeleton, a (meth)acrylic compound having a dipentaerythritol skeleton, a (meth)acrylic compound having a pentaerythritol skeleton and the like are preferable from the viewpoint that the conformance of the sealing material to the substrate can be increased regardless of the change in temperature environment while maintaining the flexibility and the barrier property against moisture and acids of the cured product of the curable resin composition. Among them, specifically, ethoxylated isocyanurate tri(meth)acrylate, ethylene oxide-modified isocyanurate tri(meth)acrylate, ethylene oxide-modified dipentaerythritol hexa(meth)acrylate, propylene oxide-modified dipentaerythritol hexa(meth)acrylate, and caprolactone-modified dipentaerythritol hexa(meth)acrylate are preferable.

### <Polyfunctional (meth)allyl compound (C)>

The polyfunctional allyl compound (C) is a compound having 2 to 4 (meth)allyl groups. The polyfunctional allyl compound (C) can be used alone or in combination of two or more types thereof. (C) is less likely to be polymerized alone, thus is excellent in formation of a cross-linked network with other components, can increase the toughness of the cured product of the curable resin composition, and can increase the conformance of the sealing material to the substrate. The barrier property against moisture and acids can be increased, and misalignment of a liquid crystal can be prevented even under a harsh humid heat test or acidic conditions.

The polyfunctional allyl compound (C) is preferably a compound represented by the following Formula 3. 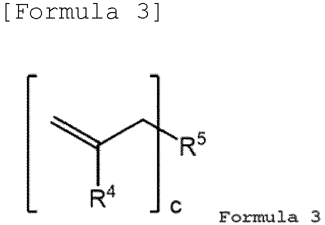
(In the formula, c is an integer of 2 to 4. R⁴ is a hydrogen atom or a methyl group. R⁵ is a 2 to 4 valent organic group having 2 to 40 carbon atoms.)
R⁴ in the formula is a hydrogen atom or a methyl group, and is preferably a hydrogen atom from the viewpoint of increasing the flexibility of the cured product of the curable resin composition and increasing the conformance of the sealing material to the substrate. C is an integer of 2 to 4, and when c is in this range, the barrier property against moisture and acids of the sealing material can be increased, and misalignment of a liquid crystal can be prevented even under a harsh humid heat test or acidic conditions. In addition, the flexibility of the cured product of the curable resin composition can be increased, and the conformance of the sealing material to the substrate can be increased. From the same viewpoint, R⁵ is also 2 to 4 valent. The carbon number of R⁵ is 2 to 40, preferably 2 to 30, and more preferably 2 to 25. When the carbon number of R⁵ is within this range, the crosslinking density of the cured product of the curable resin composition is sufficient, the sealing material has a high barrier property against moisture and acids, and misalignment can be suppressed even under a harsh humid heat test or acidic conditions.

The organic group is a group that contains C and can further contain at least one element selected from the group consisting of Si, N, P, O, and S. The organic group can be a polymer having a repeating unit. In the structure, a group such as a ketone group, an ester group, an ether group, a hydroxyl group, an amide group, a thioether group, or an isocyanurate group can be also contained.

Specific examples of the compound in which c in the formula is 2 include 1,4-cyclohexanedicarboxylic acid di(meth)allyl ester, isophthalic acid di(meth)allyl ester, phthalic acid di(meth)allyl ester, hexahydrophthalic acid di(meth)allyl ester, di (meth)allylmethylglycidyl isocyanurate, magnolol, di(meth) allyldiphenylsilane, trimethylolpropane (meth)allyl ether, 2,2'-bis(3-(meth)allyl-4-ydroxyphenyl)propane, 2,2-bis(3-(meth)allyl-4-allyloxyphenyl)propane, 2,2-bis(3-(meth)allyl-4-glycidyloxyphenyl)propane, 1,3-di(meth)allyl-5-glycidyl isocyanurate, and 1,3-di(meth)allyl cyanurate.

Specific examples of the compound in which c is 3 include triallyl isocyanurate, pentaerythritol tri(meth)allyl ether, glycerin tri(meth)allyl ether, and trimethylolpropane triallyl ether.

Specific examples of the compound in which c is 4 include 1,3,4,6 tetra(meth)allyl glycoluril, 1,3,4,6 tetra(meth)allyl-3a-methylglycoluril, pentaerythritol tetra(meth)allyl ether, and tetra(meth)allyloxyethane.

Among the (meth)allyl compounds, a (meth)allyl compound having an isocyanurate skeleton, a (meth)allyl compound having a pentaerythritol skeleton and the like are preferable from the viewpoint that the barrier property of the sealing material against moisture and acids can be increased, the misalignment can be suppressed even under a harsh humid heat test or acidic conditions, the toughness of the cured product of the curable resin composition can be increased, and the conformance of the sealing material to the substrate can be increased. Among them, specifically, 1,3-diallyl-5-glycidyl isocyanurate, triallyl isocyanurate, pentaerythritol triallyl ether, and pentaerythritol tetraallyl ether are preferable.

### <Photopolymerization Initiator (D)>

When (A) above, (B) above, (C) above, and other polymerizable compounds are added, the photopolymerization initiator (D) is added to accelerate a curing reaction of the polymerizable compounds by light, and thereby light irradiation required for curing the curable resin composition can be reduced. The photopolymerization initiator (D) can be used alone or in combination of two or more types thereof. Examples of the photopolymerization initiator include a photoradical polymerization initiator, a photocationic polymerization initiator, and a photoanionic polymerization initiator. Among them, a photoradical polymerization initiator is preferable from the viewpoint of shortening the reaction time and improving the usability.

Examples of the photoradical polymerization initiator include 2,2-dimethoxy-1,2-diphenylethan-1-one, 1-hydroxycyclohexyl phenyl ketone, 2-hydroxy-2-methyl-1-phenyl-propan-1-one, 1-[4-(2-hydroxyethoxy)-phenyl]-2-hydroxy-2-methyl-1-propan-1-one, 2-hydroxy-1-{4-[4-(2-hydroxy-2-methyl-propionyl)-benzyl]-phenyl}-2-methyl-propan-1-one, 2-methyl-1-[4-(methylthio)phenyl]-2-morpholinopropan-1-one, bis(2,4,6-trimethylbenzoyl)-phenylphosphine oxide, 2,4,6-trimethylbenzoyl-diphenylphosphine oxide, 1,2-octanedione-1-[4-(phenylthio)phenyl]-2-(O-benzoyloxime), and 1-[9-ethyl-6-(2-methylbenzoyl)-9H-carbazol-3yl]ethanone-1-(O-acetyloxime).

Examples of the photocationic polymerization initiator include bis(4-tert-butylphenyl)iodonium hexafluorophosphate, bis(4-tert-butylphenyl)iodonium trifluoromethanesulfonate, cyclopropyl-diphenylsulfonium tetrafluoroborate, diphenyliodonium hexafluorophosphate, diphenyliodonium hexafluoroarsenate, 2-(3,4-dimethoxystyryl)-4,6-bis(trichloromethyl)-1,3,5-triazine, triphenylsulfonium tetrafluoroborate, triphenylsulfonium bromide, tri-p-tolylsulfonium hexafluorophosphate, and tri-p-tolylsulfonium trifluoromethanesulfonate.

Examples of the photoanionic polymerization initiator include acetophenone o-benzoyloxime, nifedipine, 2-(9-oxoxanthen-2-yl)propionic acid 1,5,7-triazabicyclo[4,4,0]dec-5-ene, 2-nitrophenylmethyl 4-methacryloyloxypiperidine-1-carboxylate, 1,2-diisopropyl-3-[bis(dimethylamino)methylene]guanidinium 2-(3-benzoylphenyl)propionate, and 1,2-dicyclohexyl-4,4,5,5,-tetramethylbiguanidinium n-butyltriphenylborate.

### <Polyfunctional urethane (meth)acrylate (E)>

The curable resin composition of the present invention can contain a polyfunctional urethane (meth)acrylate (E) as long as the object of the present invention is not hindered. The polyfunctional urethane (meth)acrylate (E) is obtained by reacting a diisocyanate compound, a polyol compound, and a (meth)acrylate compound having a hydroxyl group by a known method. The polyfunctional urethane (meth)acrylate (E) can be used alone or in combination of two or more types thereof. By such a compound being contained, the cured product of the curable resin composition can be toughened, and the conformance of the sealing material to the substrate can be further increased. In addition, the urethane group contained can exhibit a strong interaction such as hydrogen bonding between urethane groups and between urethane groups and other polar groups in a low temperature zone to a high temperature zone, and thus the cured product of the curable resin composition is toughened regardless of the temperature environment, and the conformance of the sealing material to the substrate can be further increased. The polyfunctional urethane (meth)acrylate (E) is a compound having 2 to 3 (meth)acrylic groups, and when the number of (meth)acrylic groups is in this range, the cured product of the curable resin composition does not become rigid, the conformance of the sealing material to the substrate can be increased, the polarity is not excessively increased, and compatibility with other components can be maintained.

As the diisocyanate compound, a known compound can be used. Examples thereof include an aliphatic diisocyanate, an alicyclic diisocyanate, and an aromatic diisocyanate. Specific examples thereof include aliphatic diisocyanates such as pentamethylene diisocyanate, hexamethylene diisocyanate, and trimethylhexamethylene diisocyanate; alicyclic diisocyanates such as isophorone diisocyanate, hydrogenated diphenyl diisocyanate, and norbornene diisocyanate; and aromatic diisocyanates such as xylylene diisocyanate, tolylene diisocyanate, and diphenylmethane diisocyanate. Among them, aliphatic and alicyclic diisocyanates are preferable from the viewpoint of preventing coloring of the resulting sealing material over time.

As the polyol compound, a known compound can be used. Examples thereof include a polyester polyol, a polyether polyol, a polycarbonate polyol, and a polyol composed of a hydrocarbon. The polyol compound is preferably a divalent diol compound or a trivalent triol compound from the viewpoint that the polarity of the polyfunctional urethane acrylate compound obtained after the reaction does not become too high and the conformance of the sealing material to the substrate can be increased.

As the polyester polyol, a compound obtained by condensation reaction of a dicarboxylic acid compound and a polyol compound can be used. Specific examples of the dicarboxylic acid compound include succinic acid, adipic acid, pimelic acid, and sebacic acid. Among them, adipic acid and pimelic acid are preferable. Examples of the polyol compound include a diol compound and a triol compound. Specific examples of the diol compound include ethylene glycol, propylene glycol, 1,4-butanediol, 1,5-pentanediol, 3-methyl-1,5-pentanediol, 2,4-diethyl-1,5-pentanediol, 1,6-hexanediol, 1,7-heptanediol, 1,8-octanediol, diethylene glycol, and dipropylene glycol. Specific examples of the triol compound include glycerin, 1,2,4-butanetriol, and trimethylolpropane. Among them, 1,5-pentanediol, 3-methyl-1,5-pentanediol, 1,6-hexanediol, diethylene glycol, and glycerin are preferable.

As the polyether polyol, a known compound can be used. Specific examples thereof include diol compounds such as polyethylene glycol, polypropylene glycol, polybutylene glycol, and polytetramethylene glycol, and triol compounds such as polyoxypropylene triol and polyoxyethylene polyoxypropylene triol. Among them, polyethylene glycol, polypropylene glycol, and polyoxypropylene triol are preferable.

As the polycarbonate polyol, a compound obtained by transesterification of a carbonic acid diester and a polyol compound can be used. Specific examples of the carbonic acid diester include diphenyl carbonate, dimethyl carbonate, and diethylene carbonate. Among them, diphenyl carbonate is preferable. Examples of the polyol compound include a diol compound and a triol compound. Specific examples of the diol compound include ethylene glycol, propylene glycol, 1,4-butanediol, 1,5-pentanediol, 3-methyl-1,5-pentanediol, 2,4-diethyl-1,5-pentanediol, 1,6-hexanediol, 1,7-heptanediol, 1,8-octanediol, diethylene glycol, and dipropylene glycol. Specific examples of the triol compound include glycerin, 1,2,4-butanetriol, and trimethylolpropane. Among them, 1,5-pentanediol, 3-methyl-1,5-pentanediol, 1,6-hexanediol, diethylene glycol, and glycerin are preferable.

As the polyol composed of a hydrocarbon, a known compound can be used. Specific examples thereof include diol compounds such as ethylene glycol, propylene glycol, 1,4-butanediol, 1,5-pentanediol, 3-methyl-1,5-pentanediol, 2,4-diethyl-1,5-pentanediol, 1,6-hexanediol, 1,7-heptanediol, and 1,8-octanediol, and triol compounds such as glycerin, 1,2,4-butanetriol, and trimethylolpropane. Among them, 1,5-pentanediol, 3-methyl-1,5-pentanediol, 1,6-hexanediol, and glycerin are preferable.

As the (meth)acrylate compound having a hydroxyl group, a known compound can be used. Specifically, 2-hydroxyethyl (meth)acrylate, 2-hydroxypropyl (meth)acrylate, 4-hydroxybutyl (meth)acrylate, 4-hydroxycyclohexyl (meth)acrylate, 5-hydroxycyclooctyl (meth)acrylate, 2-hydroxy-3-phenyloxypropyl (meth)acrylate, propylene glycol monoacrylate, polyethylene glycol mono(meth) acrylate, polypropylene glycol mono(meth)acrylate and the like can be used. Among them, 2-hydroxyethyl acrylate and propylene glycol monoacrylate are preferable from the viewpoint that coloring of the sealing material over time can be prevented, the flexibility of the cured product of the curable resin composition can be increased, and the conformance of the sealing material to the substrate can be increased.

The weight average molecular weight of the polyfunctional urethane (meth)acrylate (E) is preferably 1,000 to 15,000 from the viewpoint that the sealing material has high conformance to the substrate regardless of temperature environment while maintaining the barrier property against moisture and acids, and the polyfunctional urethane (meth)acrylate (E) itself is easy to handle. The weight average molecular weight of the urethane (meth)acrylate is determined by gel permeation chromatography (GPC) using a calibration curve of standard polystyrene.

The content of the polyfunctional urethane (meth)acrylate (E) in the curable resin composition of the present invention is 0 to 20 parts by mass, and preferably 1 to 15 parts by mass relative to total 100 parts by mass of (A), (B), and (C).

### <Surfactant (F)>

The curable resin composition of the present invention can contain a surfactant (F) as long as the object of the present invention is not hindered. Because the surfactant (F) has a high lyophobic property, when the surfactant (F) is contained in the curable resin composition, the moisture barrier property of the sealing material is improved, and even when the sealing material is exposed to a harsh humid heat test or acidic conditions, misalignment of a liquid crystal can be further suppressed. Though as the surfactant (F), a known silicon surfactant, fluorine surfactant, acrylic surfactant and the like can be used without particular limitation, a fluorine surfactant is preferable from the viewpoint of increasing the moisture barrier property. Specific examples of commercially available products of the fluorine surfactant include "MEGAFACE F-410", "MEGAFACE F-430", "MEGAFACE F-444", "MEGAFACE F-472SF", "MEGAFACE F-477", "MEGAFACE F-552", "MEGAFACE F-553", "MEGAFACE F-554", "MEGAFACE F-555", "MEGAFACE F-556", "MEGAFACE F-558", "MEGAFACE F-559", "MEGAFACE F-561", "MEGAFACE R-94", "MEGAFACE RS-72-K", and "MEGAFACE RS-75" manufactured by DIC Corporation. These surfactants can be used alone or in combination of two or more types thereof.

The content of the surfactant (F) in the curable resin composition of the present invention is 0 to 3 parts by mass, and preferably 0.01 to 1 parts by mass relative to total 100 parts by mass of (A), (B), and (C).

### <Silane coupling agent (G)>

The curable resin composition of the present invention can contain a silane coupling agent (G) as long as the object of the present invention is not hindered. The silane coupling agent (G) improves the interaction between other components and the substrate, and when the silane coupling agent (G) is contained in the curable resin composition, the toughness and the adhesiveness to the substrate of the cured product of the curable resin composition are improved, and the conformance to the substrate can be further increased regardless of the change in temperature environment. Though a known silane coupling agent can be used without particular limitation, a silane coupling agent having a reactive functional group such as a (meth)acrylic group, a vinyl group, a thiol group, an epoxy group, and an isocyanate group is preferable from the viewpoint that the liquid crystal is less likely to be contaminated by bleedout and misalignment of a liquid crystal is less likely to be caused when the sealing material is used for a long period of time. Specific examples thereof include 3-(meth)acryloxypropylmethyldimethoxysilane, 3-(meth)acryloxypropylmethyltrimethoxysilane, 3-(meth)acryloxypropylmethyldiethoxysilane, 3-(meth)acryloxypropylmethyltriethoxysilane, vinyltrimethoxysilane, vinyltriethoxysilane, 3-mercaptopropylmethyldimethoxysilane, 3-mercaptopropylmethyltrimethoxysilane, 3-glycidoxypropylmethyldimethoxysilane, 3-glycidoxypropyltrimethoxysilane, 3-glycidoxypropylmethyldiethoxysilane, 3-glycidoxypropyltriethoxysilane, and 3-isocyanatopropyltriethoxysilane. These silane coupling agents can be used alone or in combination of two or more types thereof.

The content of the silane coupling agent (G) in the curable resin composition of the present invention is 0 to 15 parts by mass, and preferably 1 to 10 parts by mass relative to total 100 parts by mass of (A), (B), and (C).

### <Other components>

The curable resin composition of the present invention can contain additives such as an epoxy compound, a curing accelerator, an ultraviolet absorber, a light stabilizer, an antioxidant, a polymerization inhibitor, a leveling agent, an adhesion imparting agent, a plasticizer, an antifoaming agent, a filler, a light shielding material, a conductive material, and a spacer in addition to the polyfunctional urethane (meth)acrylate (E), the surfactant (F), and the silane coupling agent (G) as long as the object of the present invention is not hindered.

### <Composition ratio (blending ratio)>

In the curable resin composition of the present invention, the thiol-ene reaction proceeds between thiol groups of the polyfunctional thiol compound (A) and polymerizable unsaturated bonds of the polyfunctional (meth)acrylic compound (B) and the polyfunctional (meth)allyl compound (C), and a cured product is obtained. In the thioether bond to be formed, the bond angle can be flexibly changed, thus the flexibility of the cured product of the curable resin composition can be increased, and curing can occur at a high density so that atoms fill gaps between bonds. Therefore, the barrier property against moisture and acids can be increased. Because the polyfunctional (meth)allyl compound (C) is not polymerized alone, a thioether bond can be efficiently formed by the polyfunctional (meth)allyl compound (C) being contained, and a flexible and tough cured product is obtained. In addition, because the crosslinking density is improved, the barrier property is further increased, the sealing material becomes excellent in conformance to the substrate, and misalignment of a liquid crystal can be prevented even in a state where the cured product is in contact with the liquid crystal under harsh environment of heat and humidity or acidic conditions. The polyfunctional (meth)acrylic compound (B) can suppress the reactivity between the polyfunctional thiol compound (A) and the polyfunctional (meth) allyl compound (C), increase the stability of the uncured product of the curable resin composition, and improve the usability. Further, the polyfunctional (meth)acrylic compound (B) imparts appropriate flexibility and polarity to the cured product of the curable resin composition, and can increase the conformance of the sealing material to the substrate regardless of temperature change. Accordingly, all of (A), (B), and (C) are indispensable so that the curable resin composition of the present invention is stable in an uncured state, and the sealing material including the cured product does not cause misalignment of a liquid crystal even in a state where the cured product is in contact with the liquid crystal under harsh environment of heat and humidity or acidic conditions, and, in addition, is excellent in conformance to the substrate regardless of the change in temperature environment. By further using (D) above for the curable resin composition containing (A), (B), and (C), the curable resin composition can be cured only by light irradiation to exhibit the above effects. In addition, when blending is performed so that a blending mass ratio (B)/(C) between (B) and (C) is 0.1 to 1.0, and a ratio between a functional group concentration of thiol groups of (A) and a sum of a functional group concentration of a polymerizable unsaturated bond of (B) and a functional group concentration of a polymerizable unsaturated bond of (C) (thiol group/polymerizable unsaturated bond) is 0.5 to 3.0, the curable resin composition is stable in an uncured state, and the sealing material obtained by curing does not cause misalignment of a liquid crystal even in a state where the sealing material is in contact with the liquid crystal under harsh environment of heat and humidity or acidic conditions, and, in addition, is excellent in conformance to the substrate regardless of the change in temperature environment. The functional group concentration of the thiol groups is a number represented by parts by mass of (A) in total 100 parts by mass of (A), (B), and (C) × the number of functional groups of thiol groups of (A)/the molecular weight of (A), and the sum of a functional group concentration of a polymerizable unsaturated bond of (B) and a functional group concentration of a polymerizable unsaturated bond of (C) is a number represented by [Parts by mass of (B) in total 100 parts by mass of (A), (B) and (C) × number of (meth)acrylic groups of (B)/molecular weight of (B)] + [parts by mass of (C) in total 100 parts by mass of (A), (B) and (C) × number of allyl groups of (C)/molecular weight of (C)].

In the curable resin composition of the present invention, the blending mass ratio (B)/(C) between (B) and (C) is preferably 0.2 to 1.0 so that the curable resin composition is excellent in stability in an uncured state and the usability is further improved, the blending mass ratio (B)/(C) between (B) and (C) is preferably 0.2 to 0.9 so that the toughness of the cured product of the curable resin composition is improved, the conformance of the sealing material to the substrate is further increased, in addition, moderate flexibility and polarity is imparted to the cured product, and the conformance of the sealing material to the substrate is further increased regardless of the change in temperature environment, and the blending mass ratio (B)/(C) between (B) and (C) is preferably 0.1 to 0.8 so that the barrier property of the cured product of the curable resin composition against moisture and acids is increased, and misalignment of a liquid crystal is prevented even under a harsh humid heat test or acidic conditions, that is, the blending mass ratio (B)/(C) between (B) and (C) is preferably 0.2 to 0.8 so that performances of high usability of the curable resin composition, the high conformance of the sealing material to the substrate regardless of the change in temperature environment, and prevention of misalignment of a liquid crystal by the sealing material even under a harsh humid heat test or acidic conditions are simultaneously achieved at a higher level.

In the curable resin composition of the present invention, in order to increase the toughness of the cured product of the curable resin composition and further increase the conformance of the sealing material to the substrate, the ratio between a functional group concentration of thiol groups of (A) and a sum of a functional group concentration of a polymerizable unsaturated bond of (B) and a functional group concentration of a polymerizable unsaturated bond of (C) (thiol group/polymerizable unsaturated bond) is preferably 0.7 to 3.0, in order to maintain the flexibility and toughness of the cured product of the curable resin composition from a low temperature to a high temperature and further increase the conformance of the sealing material to the substrate regardless of the change in temperature environment, the ratio between a functional group concentration of thiol groups of (A) and a sum of a functional group concentration of a polymerizable unsaturated bond of (B) and a functional group concentration of a polymerizable unsaturated bond of (C) (thiol group/polymerizable unsaturated bond) is preferably 0.7 to 2.8, in order to increase the barrier property of the cured product of the curable resin composition against moisture and acids and to prevent misalignment of a liquid crystal even under a harsh humid heat test or acidic conditions, the ratio between a functional group concentration of thiol groups of (A) and a sum of a functional group concentration of a polymerizable unsaturated bond of (B) and a functional group concentration of a polymerizable unsaturated bond of (C) (thiol group/polymerizable unsaturated bond) is preferably 0.5 to 2.6, that is, in order to simultaneously achieve performances of increasing the conformance of the sealing material to the substrate regardless of the change in temperature environment and preventing of misalignment of a liquid crystal even under a harsh humid heat test or acidic conditions at a higher level, the ratio between a functional group concentration of thiol groups of (A) and a sum of a functional group concentration of a polymerizable unsaturated bond of (B) and a functional group concentration of a polymerizable unsaturated bond of (C) (thiol group/polymerizable unsaturated bond) is preferably 0.7 to 2.6.

In the curable resin composition of the present invention, the ratio of (D) relative to total 100 parts by mass of (A), (B), and (C) is preferably 0.01 to 10.0 parts by mass, and more preferably 0.1 to 10.0 parts by mass. When the content of (D) is within the above range, a sealing material that does not cause misalignment of a liquid crystal even in a state where the sealing material is in contact with the liquid crystal under a harsh environment of heat and humidity or acidic conditions, and, in addition, is excellent in in conformance to the substrate regardless of the change in temperature environment can be obtained.

### <Film liquid crystal panel>

Examples of the film liquid crystal panel of the present invention include a light control member that only controls transparency and opacity by liquid crystal orientation and a member that displays images such as a display. The film liquid crystal panel of the present invention is, for example, one in which a pair of base plates is arranged so that the base plates face each other, the periphery is sealed with a sealing material for the film liquid crystal panel, and a liquid crystal material exists therebetween. The base plates are those in which a silver or copper electrode or a transparent electrode such as ITO or PEDOT is applied on a plastic transparent film substrate such as polyethylene terephthalate, polycarbonate, a cycloolefin (co)polymer, PMMA, or polyimide. An orientation film or the like may be further formed on the transparent electrode.

The film liquid crystal panel of the present invention is a liquid crystal panel formed of a base plate in which the plastic transparent film substrate is used, and the sealing material for the film liquid crystal panel is a sealing material used for the film liquid crystal panel.

### <Formation of film liquid crystal panel>

The film liquid crystal panel of the present invention is formed by applying the curable resin composition of the present invention to one of the pair of base plates, then superposing the other base plate thereon with a liquid crystal interposed therebetween, and irradiating light to cure the curable resin composition. The film liquid crystal panel of the present invention is also formed by applying a polymer dispersed liquid crystal containing a liquid crystal and a curable resin composition to one of the pair of base plates, superposing the other base plate thereon, irradiating light to cure the polymer dispersed liquid crystal, then applying the curable resin composition of the present invention to the outer periphery, and irradiating light to cure the curable resin composition.

The method for applying the curable resin composition is not particularly limited, and for example, a method using coating equipment such as dispenser coating, an inkjet method, or a screen printing method, or a method of manually applying the curable resin composition with a syringe or a brush is applied.

The light source for irradiating the curable resin composition with light is not particularly limited, and for example, a mercury lamp such as a high-pressure mercury-vapor lamp or an ultra-high pressure mercury lamp, a black light lamp, an LED lamp, a halogen lamp, an electrodeless lamp, a xenon lamp, a mercury fluorescent lamp, an LED fluorescent lamp, sunlight, an electron beam irradiation instrument or the like is applied.

The present invention will be described more specifically with reference to Examples and Comparative Examples.

### <Evaluation method>

The performance of each curable resin composition in Examples and Comparative Examples was evaluated by the method described below.

### <Stability of curable resin composition>

Each curable resin composition produced in Examples and Comparative Examples was added to a sample bottle, and was allowed to stand at 25°C under light-shielding conditions. Every day, the sample bottle was tilted at an angle of 45° in an environment at 25°C where lighting was a yellow lamp that did not emit light having a wavelength of 500 nm or less, after 5 minutes, the state of the curable resin composition in the bottle was observed, and the time until the fluidity of the curable resin composition disappeared and the curable resin composition gelled was checked. In the above observation, the curable resin composition whose shape did not change according to the tilting of the bottle was determined to be gelled. The longer the time until gelation is, the higher the stability is. The times until gelation are described in tables.
⊙: Gelation does not occur for 7 days or more.
∘: Gelation occurs in 4 to 6 days.
×: Gelation occurs within 3 days.

### <Conformance to substrate>

Each curable resin composition produced in Examples and Comparative Examples was applied onto a polyethylene terephthalate (PET) film having a thickness of 100 um with an applicator so that the film thickness was 100 um, and ultraviolet irradiation (1000 mJ/cm²) was performed using a high-pressure mercury-vapor lamp to cure the curable resin composition. The obtained PET film with a cured film was cut into a rectangular shape having a length of 100 mm and a width of 10 mm to be used as a sample. The obtained sample was subjected to a bending test using an MIT tester (BE-202 manufactured by TESTER SANGYO CO,. LTD.) (conditions: load: 1 N, bending speed: 175 cpm, bending radius: 2.5 mm, bending speed: 135°). The test sample was visually observed every 5000 times of bending, and the presence or absence of cracks and peeling was checked. The larger the number of times of bending until occurrence of cracks and peeling, the better the conformance to the substrate. The numbers of times of bending at which cracks and peeling occurred are described in tables.
⊙: No crack or peeling occurred even after 20,000 times of bending (5000 times × 4).
∘: Cracks and peeling occur after 20,000 times (5000 times × 4) or after 15000 times (5000 times × 3).
×: Cracks and peeling occur within 10,000 times (5000 times × 2).

### <Conformance to substrate after temperature environment change acceleration test>

Each curable resin composition produced in Examples and Comparative Examples was applied onto a polyethylene terephthalate (PET) film having a thickness of 100 µm with an applicator so that the film thickness was 100 µm, and ultraviolet irradiation (1000 mJ/cm²) was performed using a high-pressure mercury-vapor lamp to cure the curable resin composition. The obtained PET film with a cured film was cut into a rectangular shape having a length of 100 mm and a width of 10 mm to be used as a sample. The obtained sample was exposed to heating and cooling shock of (- 30°C, 30 minutes ⇔ 80°C, 30 minutes) × 200 times as a temperature environment change acceleration test, and then was subjected to a bending test using an MIT tester (BE-202 manufactured by TESTER SANGYO CO,. LTD.) (conditions: load: 1 N, bending speed: 175 cpm, bending radius: 2.0 mm, bending speed: 135°). The test sample was visually observed every 5000 times of bending, and the presence or absence of cracks and peeling was checked. The larger the number of times of bending until occurrence of cracks and peeling, the better the conformance to the substrate. The numbers of times of bending at which cracks and peeling occurred are described in tables.
⊙: No crack or peeling occurred even after 20,000 times of bending (5000 times × 4).
∘: Cracks and peeling occur after 20,000 times (5000 times × 4) or after 15000 times (5000 times × 3).
×: Cracks and peeling occur within 10,000 times (5000 times × 2).

### <Misalignment after harsh environment of heat and humidity>

Using a dispenser (SHOTMASTER manufactured by Musashi Engineering, Inc.), each curable resin composition produced in Examples and Comparative Examples was applied in a rectangular frame shape of 35 mm × 40 mm (line width: 1 mm) onto a 40 mm × 45 mm glass base plate (RT-DM88-PIN manufactured by EHC. Co., Ltd.) on which a transparent electrode and an orientation film were placed in this order, and a liquid crystal (MLC-11900-000 manufactured by Merck Corporation) was dropped inside the curable resin composition drawn on the frame. Then, the glass base plate and the opposing glass base plate were bonded under reduced pressure. Ultraviolet irradiation (1000 mJ/cm²) was performed using a high-pressure mercury-vapor lamp to obtain a liquid crystal panel. The produced liquid crystal panel was exposed to a condition of 60°C and 95% RH for 1000 hours, and then driven at a voltage of AC 5 V in a halftone display state, and the misalignment of the liquid crystal in the vicinity of the sealing material including the cured product of the curable resin composition was observed with a polarizing microscope. The shorter the distance at which the misalignment has spread from the end of the sealing material, the less likely the misalignment is to occur. The distances at which the misalignment has spread are described in tables.
⊙: No misalignment has spread beyond 0.4 mm from the end of the sealing material.
∘: The misalignment has spread beyond 0.4 mm from the end of the sealing material, but the misalignment has not spread beyond 0.8 mm.
×: The misalignment has spread beyond 0.8 mm from the end of the sealing material.

### <Misalignment after acidic condition test>

Using a dispenser (SHOTMASTER manufactured by Musashi Engineering, Inc.), each curable resin composition produced in Examples and Comparative Examples was applied in a rectangular frame shape of 35 mm × 40 mm (line width: 1 mm) onto a 40 mm × 45 mm glass base plate (RT-DM88-PIN manufactured by EHC. Co., Ltd.) on which a transparent electrode and an orientation film were placed in this order, and a liquid crystal (MLC-11900-000 manufactured by Merck Corporation) was dropped inside the curable resin composition drawn on the frame. Then, the glass base plate and the opposing glass base plate were bonded under reduced pressure. Ultraviolet irradiation (1000 mJ/cm²) was performed using a high-pressure mercury-vapor lamp to obtain a liquid crystal panel. The produced liquid crystal panel was set in a combined cyclic corrosion test instrument CYP-90 A manufactured by Suga Test Instruments Co.,Ltd., artificial acid rain in which the pH was adjusted to 3.5 by adding nitric acid, sulfuric acid, and a 10% aqueous sodium hydroxide solution to a 5% aqueous sodium chloride solution was prepared, the produced liquid crystal panel was exposed to a cycle of (spraying of the following artificial acid rain at 30°C and 98% for 30 minutes 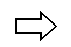 wetting at 30°C and 95% for 90 minutes 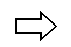 drying at 50°C and 20% for 2 hours 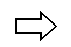 drying at 30°C and 20% for 2 hours) 10 times and then driven at a voltage of AC 5 V in a halftone display state, and the misalignment of the liquid crystal in the vicinity of the sealing material including the cured product of the curable resin composition was observed with a polarizing microscope. The shorter the distance at which the misalignment has spread from the end of the sealing material, the less likely the misalignment is to occur. The distances at which the misalignment has spread are described in tables.
⊙: No misalignment has spread beyond 0.4 mm from the end of the sealing material.
∘: The misalignment has spread beyond 0.4 mm from the end of the sealing material, but the misalignment has not spread beyond 0.8 mm.
×: The misalignment has spread beyond 0.8 mm from the end of the sealing material.

### <Polyfunctional thiol compound (A)>

A-1: Dipentaerythritol hexakis(3-mercaptopropionate) [number of thiol groups: 6, molecular weight: 783.0]
A-2: Pentaerythritol tetrakis(3-mercaptopropionate) [number of thiol groups: 4, molecular weight: 488.6]
A-3: Tris-[(3-mercaptopropiomoroxy)-ethyl]-isocyanurate [number of thiol groups: 3, molecular weight: 525.6]

### <Polyfunctional (meth)acrylic compound (B)>

B-1: Ethoxylated isocyanuric acid triacrylate [number of acrylic groups: 3, acrylic equivalent: 141, molecular weight: 423.0]
B-2: Trimethylolpropane trimethacrylate [number of methacrylic groups: 3, methacrylic equivalent: 113, molecular weight: 338.0]
B-3: Caprolactone-modified dipentaerythritol hexaacrylate [number of acrylic groups: 6, acrylic equivalent: 131, molecular weight: 783.0]
B-4: Caprolactone-modified ditrimethylolpropane tetraacrylate [number of acrylic groups: 4, acrylic equivalent: 231, molecular weight: 922.5]
B-5: Dipropylene glycol diacrylate [number of acrylic groups: 2, acrylic equivalent: 121, molecular weight: 242.0]
B-6: Pentaerythritol tetraacrylate [number of acrylic groups: 4, acrylic equivalent: 88, molecular weight: 352.0]
B-7: Propylene oxide-modified trimethylolpropane triacrylate [number of acrylic groups: 3, acrylic equivalent: 261, molecular weight: 783.0]

### <Polyfunctional (meth)allyl compound (C)>

C-1: 1,3-Diallyl-5-glycidyl isocyanurate [number of allyl groups: 2, molecular weight: 265.3]
C-2: Triallyl isocyanurate [number of allyl groups: 3, molecular weight: 249.7]
C-3: Pentaerythritol tetraallyl ether [number of allyl groups: 4, molecular weight: 296.4]
C-4: Ethylene glycol monoallyl ether [number of allyl groups: 1, molecular weight: 102.1]

### <Photopolymerization Initiator (D)>

D-1: Bis(2,4,6-trimethylbenzoyl)-phenylphosphine oxide
D-2: 1-[9-Ethyl-6-(2-methylbenzoyl)-9H-carbazol-3yl]ethanone-1-(O-acetyloxime)
D-3: 1-Hydroxycyclohexyl phenyl ketone

### <Polyfunctional urethane (meth)acrylate (E)>

### [Synthesis of urethane (meth)acrylate (E-1)]

Into a reaction vessel equipped with a stirrer, a reflux condenser, a nitrogen inlet tube, and a thermometer, 9.7 parts by mass of glycerin was charged, and stirring was started. Then, 0.1 parts by mass of dibutyltin laurate and 88.2 parts by mass of isophorone diisocyanate as a diisocyanate were added, the internal temperature was raised to 80°C while attention was paid to heat generation, and then the mixture was stirred for 3 hours while maintaining the temperature. Further, 0.1 parts by mass of methoquinone as a polymerization inhibitor and 41.8 parts by mass of propylene glycol monoacrylate as a (meth)acrylate having a hydroxyl group were added, and the mixture was stirred at 85°C for 2 hours to obtain a urethane (meth)acrylate (E-1) (weight average molecular weight: 7,500).

### [Synthesis of polyol compound (e-1)]

Into a reaction vessel equipped with a stirrer, a fractionating column, a nitrogen inlet tube, and a thermometer, 151.5 parts by mass of pimelic acid and 187.3 parts by mass of diethylene glycol were charged, and the mixture was heated to 140°C and stirred under a nitrogen atmosphere. Thereto was added 0.01 parts by mass of tetrabutyl titanate, and the mixture was heated to 220°C to perform a dehydration reaction. Then, the resulting product was subsequently held at 220°C to perform a dehydration reaction. After 18 hours from the start of the dehydration reaction, the content was cooled to obtain a diol compound (e-1) (weight average molecular weight: 1,000).

### [Synthesis of urethane (meth)acrylate (E-2)]

Into a reaction vessel equipped with a stirrer, a reflux condenser, a nitrogen inlet tube, and a thermometer, 101.1 parts by mass of the polyol compound (e-1) was charged, and stirring was started. Then, 0.1 parts by mass of dibutyltin laurate and 32.1 parts by mass of isophorone diisocyanate as a diisocyanate were added, the internal temperature was raised to 80°C while attention was paid to heat generation, and then the mixture was stirred for 3 hours while maintaining the temperature. Further, 0.1 parts by mass of methoquinone as a polymerization inhibitor and 24.0 parts by mass of 2-hydroxyethyl acrylate as a (meth)acrylate having a hydroxyl group were added, and the mixture was stirred at 85°C for 2 hours to obtain a urethane (meth)acrylate (E-2) (weight average molecular weight: 3,000).

### <Surfactant (F)>

F-1: MEGAFACE F-554 manufactured by DIC Corporation
F-2: MEGAFACE F-477 manufactured by DIC Corporation

### <Silane coupling agent (G)>

G-1: 3-Methacryloxypropyltrimethoxysilane
G-2: 3-Mercaptopropyltrimethoxysilane

### [Examples 1 to 20 and Comparative Examples 1 to 15]

The above components were added to a stirring pot in the ratios shown in Tables 1-1, 1-2, 2-1, and 2-2 below, and mixed and stirred for 2 hours to obtain 1 kg of each curable resin composition. Each evaluation was performed using the curable resin compositions. The results are shown in tables.

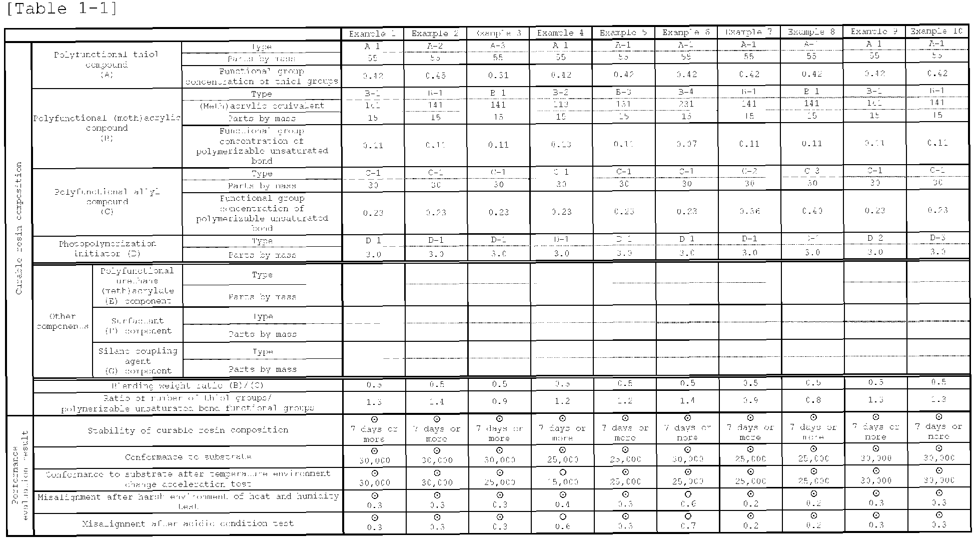

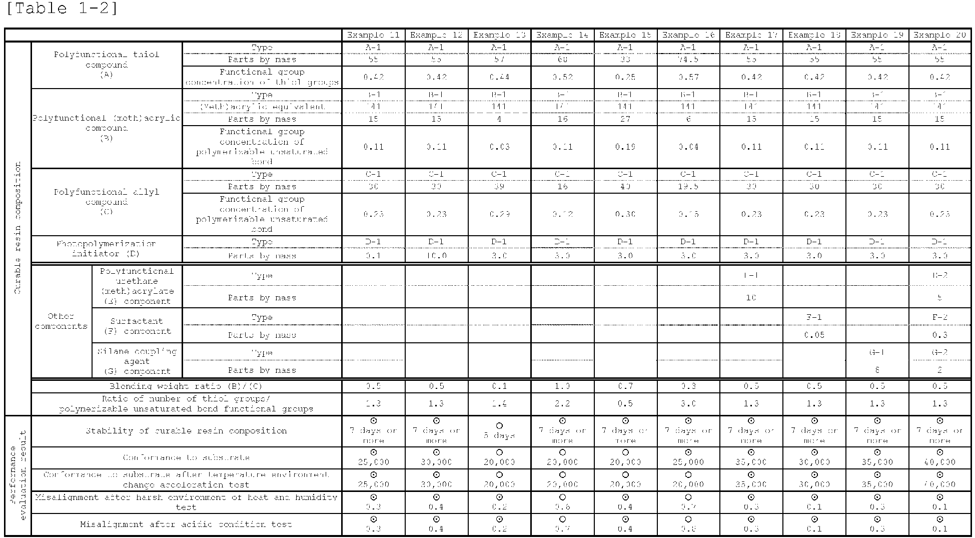

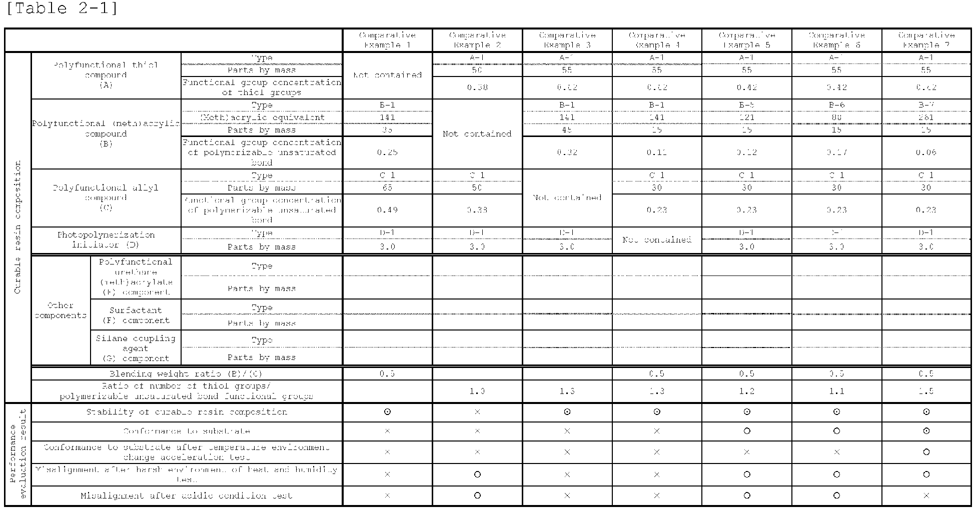

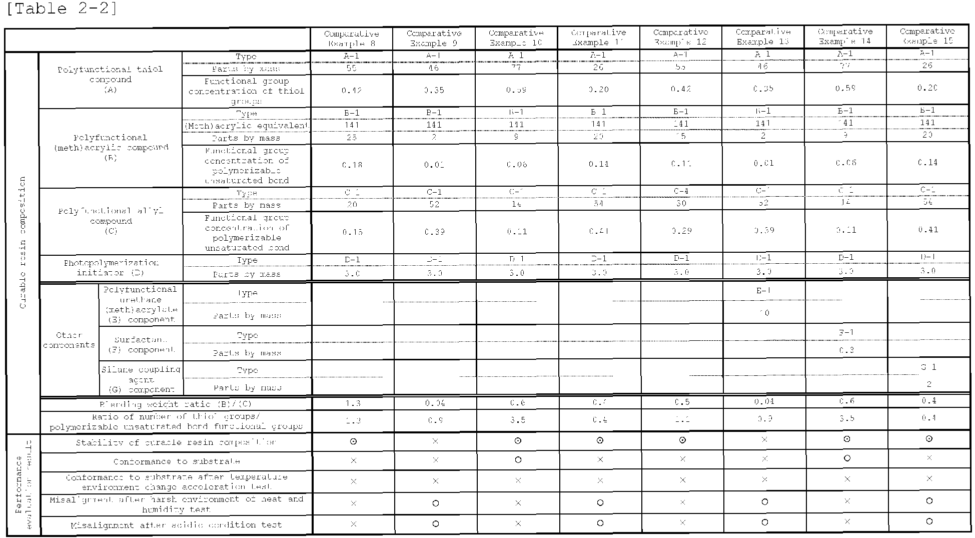

As a result of the above tests, the curable resin composition of each Example had properties that the uncured product is highly stable, and the cured product has high conformance to the substrate regardless of the temperature environment and further does not cause the misalignment of the liquid crystal after the wet heat test and after the acidic condition test by containing the components (A) to (D) in appropriate amounts specified in the present invention.

On the other hand, in Comparative Example 1, the curable resin composition did not contain the polyfunctional thiol compound (A), and thus the sealing material for a film liquid crystal panel obtained by curing the curable resin composition had low conformance to the substrate, and caused the misalignment of the liquid crystal in the harsh humid heat test and the acidic condition test. In Comparative Example 2, the curable resin composition did not contain the polyfunctional (meth)acrylic compound (B), thus the curable resin composition had low stability, and the sealing material for a film liquid crystal panel obtained by curing the curable resin composition had low conformance to the substrate. In Comparative Example 3, the curable resin composition did not contain the polyfunctional allyl compound (C), and thus the sealing material for a film liquid crystal panel obtained by curing the curable resin composition had low conformance to the substrate, and caused the misalignment of the liquid crystal in the harsh humid heat test and the acidic condition test. In Comparative Example 4, the curable resin composition did not contain the photopolymerization initiator (D), and thus the sealing material for a film liquid crystal panel obtained by curing the curable resin composition had low conformance to the substrate, and caused the misalignment of the liquid crystal in the harsh humid heat test and the acidic condition test.

In Comparative Example 5, the number of functional groups of the polyfunctional (meth)acrylic compound (B) was small, and thus the sealing material for a film liquid crystal panel obtained by curing the curable resin composition had low conformance to the substrate after the temperature environment change acceleration test. In Comparative Example 6, the (meth)acrylic equivalent of the polyfunctional (meth)acrylic compound (B) was small, and thus the sealing material for a film liquid crystal panel obtained by curing the curable resin composition had low conformance to the substrate after the temperature environment change acceleration test. In Comparative Example 7, the (meth)acrylic equivalent of the polyfunctional (meth)acrylic compound (B) was large, and thus the sealing material for a film liquid crystal panel obtained by curing the curable resin composition caused the misalignment of the liquid crystal in the acidic condition test.

In Comparative Example 8, the blending mass ratio (B)/(C) was larger than the specified range, thus the conformance to the substrate was low, and the misalignment of the liquid crystal was caused in the harsh humid heat test and the acidic condition test. In Comparative Example 9, the blending mass ratio (B)/(C) was smaller than the specified range, thus the curable resin composition had low stability, and the sealing material for a film liquid crystal panel obtained by curing the curable resin composition had low conformance to the substrate.

In Comparative Example 10, the ratio between a functional group concentration of thiol groups of (A) and a sum of a functional group concentration of a polymerizable unsaturated bond of (B) and a functional group concentration of a polymerizable unsaturated bond of (C) was larger than the specified range, and thus the sealing material for a film liquid crystal panel obtained by curing the curable resin composition had low conformance to the substrate after the temperature environment change acceleration test, and caused the misalignment of the liquid crystal in the harsh humid heat test and the acidic condition test. In Comparative Example 11, the ratio between a functional group concentration of thiol groups of (A) and a sum of a functional group concentration of a polymerizable unsaturated bond of (B) and a functional group concentration of a polymerizable unsaturated bond of (C) was smaller than the specified range, and thus the sealing material for a film liquid crystal panel obtained by curing the curable resin composition also had low conformance to the substrate.

In Comparative Example 12, the number of functional groups of the polyfunctional allyl compound (C) was small, and thus the sealing material for a film liquid crystal panel obtained by curing the curable resin composition had low conformance to the substrate, and caused the misalignment of the liquid crystal in the harsh humid heat test and the acidic condition test. In Comparative Example 13, the blending amount of the photopolymerization initiator (D) was large, and thus the sealing material for a film liquid crystal panel obtained by curing the curable resin composition caused the misalignment of the liquid crystal in the harsh humid heat test and the acidic condition test.

In Comparative Example 14, the polyfunctional urethane (meth)acrylate of the component (E) was contained as other components, the blending mass ratio (B)/(C) was smaller than the specified range, thus the curable resin composition had low stability, and the sealing material for a film liquid crystal panel obtained by curing the curable resin composition had low conformance to the substrate. In Comparative Example 15, the surfactant of the component (F) was contained as other components, the ratio between a functional group concentration of thiol groups of (A) and a sum of a functional group concentration of a polymerizable unsaturated bond of (B) and a functional group concentration of a polymerizable unsaturated bond of (C) was larger than the specified range, and thus the sealing material for a film liquid crystal panel obtained by curing the curable resin composition had low conformance to the substrate after the temperature environment change acceleration test, and caused the misalignment of the liquid crystal in the harsh humid heat test and the acidic condition test. In Comparative Example 16, the silane coupling agent of the component (G) was contained as other components, the ratio between a functional group concentration of thiol groups of (A) and a sum of a functional group concentration of a polymerizable unsaturated bond of (B) and a functional group concentration of a polymerizable unsaturated bond of (C) was smaller than the specified range, and thus the sealing material for a film liquid crystal panel obtained by curing the curable resin composition also had low conformance to the substrate.

## Claims

1. A curable resin composition for use in a sealing material for a film liquid crystal panel, comprising:
(A) a polyfunctional thiol compound having 2 to 6 thiol groups;
(B) a polyfunctional (meth)acrylic compound having 3 to 6 (meth)acrylic groups and a (meth)acrylic equivalent of 100 to 250;
(C) a polyfunctional allyl compound having 2 to 4 (meth)allyl groups; and
(D) a photopolymerization initiator; wherein
a blending mass ratio (B)/(C) between (B) and (C) is 0.1 to 1.0, and
a ratio between a functional group concentration of thiol groups of (A) and a sum of a functional group concentration of a polymerizable unsaturated bond of (B) and a functional group concentration of a polymerizable unsaturated bond of (C) (thiol group/polymerizable unsaturated bond) is 0.5 to 3.0.

2. A film liquid crystal panel having an end sealed by the curable resin composition according to claim 1.
